# EUROPEAN PATENT SPECIFICATION

(11) **EP 0 347 187 B1**
(45) Date of publication and mention of the grant of the patent: **27.04.1994**
(21) Application number: 89305984.0
(22) Date of filing: 13.06.1989
(51) Int. Cl.: G02F 1/133

(54) **Color display panel**
Farbanzeigetafel
Panneau d'affichage en couleurs

(30) Priority: 14.06.1988 JP 146674/88
(43) Date of publication of application: 20.12.1989
(73) Proprietor: SHARP KABUSHIKI KAISHA, Osaka 545 (JP)
(72) Inventor: Imaya, Akihiko, Nara-shi Nara-ken (JP); Hirobe, Toshihiko, Sakai-shi Osaka-fu (JP); Seki, Atsuo, Ikoma-shi Nara-ken 630-02 (JP)
(74) Representative: Brown, Kenneth Richard

(56) References cited:
- EP-A- 0 189 214
- 1985 INTERNATIONAL DISPLAY RESEARCH CONFERENCE, San Diego, California, 1985, pages 24-26, IEEE, New York, US; S. TSURUTA et al.: "Color pixel arrangement evaluation for LC-TV"
- PATENT ABSTRACTS OF JAPAN, vol. 11, no. 144 (P-574)[2591], 12th May 1987; & JP-A-61 282 823

## Description

The present invention relates to a color display panel such as a color liquid crystal display panel or the like for effecting color image displays through controlling the inputted signals of an image by two dimensional matrices.

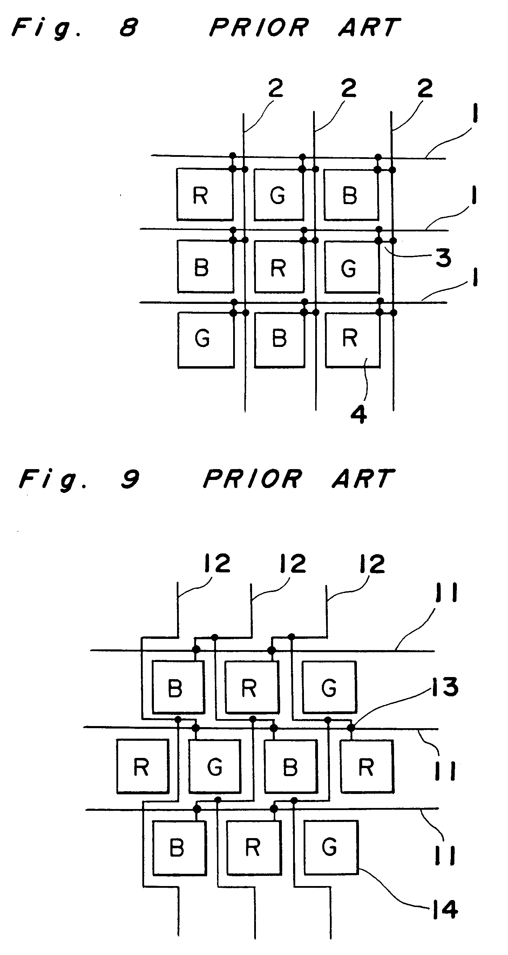

Conventionally, there are some, shown in Fig. 8 and Fig. 9, as a color liquid crystal display panel with active elements added thereinto. Fig. 8 shows a color liquid crystal display panel with the arrangement of picture elements 4, ... being disposed in checkerboard squares, while Fig. 9 is a color liquid crystal display panel with the arrangement of picture elements 14, ... being disposed in a delta arrangement. Here, the o marks 3, ... or o marks 13, ... represent active elements in the drawings to be adapted to control the "on, off" of picture elements 4, ... or picture elements 14, ..., each of which composed of the liquid crystals. Also, R, G and B respectively show the colors of red, green and blue color filters formed on the surface of the picture elements 4, ... or the picture elements 14, ... in order to represent the colors by the color liquid crystal display.

The active element 3 (or active element 13) is composed of one thin film transistor, etc. with respect to one picture element. Namely, when the active element 3 (or active element 13) is composed of a thin film transistor, a scanning signal line 1 (or scanning signal line 11) is connected with the gate of a thin film transistor, a data signal line 2 (or data signal line 12) is connected with the source or a drain of thin film transistor, a transparent electrode of a liquid crystal which constitutes a picture element 4 (or a picture element 14) is connected with the drain or a source so as to integrally form a thin film transistor on the basic plate of the display panel.

It is to be noted that in order to obtain a superior display quality in the display panel, it is necessary to provide the respective picture elements in the directionless arrangement so that the arrangement pattern of the picture elements may not become conspicuous to viewers.

However, the conventional color liquid crystal display panel shown in Fig. 8 has a problem in that the display quality is inferior as the arrangement of the respective picture elements 4, ... is regularly provided in checkerboard squares. On the other hand, the color liquid crystal display panel shown in Fig. 9 is superior in the display quality of the color as the respective picture elements 14, ... are provided in a delta arrangement, but the respective picture elements 14, ... are slipped out of place to the other, in the mutual arrangement, with a problem that the wiring becomes complicated, longer and the defect ratio, the cost become higher.

Also, even in any color liquid crystal display panel, one active element is integrally formed on the basic plate of the liquid crystal constituting the picture element, corresponding to one picture element. Accordingly, when one of the active elements is not operated, it becomes impossible for a picture element corresponding to the active element to effect its display, with a problem that the display becomes defective.

From EP-A-0 189 214, there is known a twisted nematic color liquid crystal display panel in which color filters associated with the pixels are arranged in a delta configuration. Each pixel is composed of two rectangular electrodes which are driven by signals applied to a pair of single signal lines.

Accordingly, an object of the present invention is to provide a color display panel, which does not become defective in display even if it becomes impossible for one picture element to effect its display, is superior in display quality and may be manufactured easily and inexpensively.

The invention provides a color display panel comprising:
a plurality of picture element units of R, G, B all disposed in a delta arrangement on a plane, each of the elements being composed of a plurality of picture sub-elements each separated from the other, all of the picture sub-elements being arranged in an array forming an overall regular pattern of orthogonal rows and columns on the plane;
a plurality of switching means each arranged for actuating a respective picture sub-element; and
two sets of mutually orthogonal circuit lines arranged for driving said plurality of switching means, the circuit lines of at least one of the sets each being divided into two branches which extend parallel to each other and carry the same signal, each picture element unit being connected to a respective pair of circuit lines, comprising one circuit line from each set, by picture sub-elements of the unit being connected, via respective said switching means, to different branches of one circuit line of said pair of circuit lines and to the other circuit line of said pair of circuit lines.

When the picture element units are driven, the superior display quality may be obtained, because the picture element units are arranged in a delta configuration. Also, as each of the picture element units is composed of a plurality of small picture sub-elements separated from each other, the picture element unit does not become defective in display immediately even if it is impossible for one small picture sub-element included in the picture element unit to effect its display. Also, as all the small picture sub-elements included in a plurality of picture are arranged in checkerboard squares, the wirings may be effected easily and inexpensively.

In accordance with a preferred embodiment of the present invention, there is provided a color display panel comprising a plurality of picture element units each corresponding to one of display colors and arranged periodically with a first switching means being connected to select one of display patterns, wherein said picture element units are arranged in a lateral direction and/or in a longitudinal direction with a gap of dimension about a half of the unit disposed between the adjacent pair of the units to form a display picture plane of checkerboard squares type, each of said picture element units is divided into at least two small picture elements each connecting to a second switching means connected with a bus circuit line to which the same signal is given, and the bus circuit line is provided for driving the second switching means within the gaps between the units on straight lines within the display picture plane.

These and other objects and features of the present invention will become apparent from the following description of preferred embodiments thereof taken with reference to the accompanying drawings, throughout which like parts are designated by like reference numerals, and in which:
Fig. 1 is a schematic view showing an arrangement of picture element units of a color display panel in accordance with a first embodiment of the present invention;
Fig. 2 is a block diagram of a circuit connected to the color display panel of Fig. 1;
Fig. 3 is a circuit diagram of a portion of the color display panel of Fig. 1;
Fig. 4 is a cross sectional view of a color display device provided with the color display panel of Fig. 1 therein;
Fig. 5 is a similar view to Fig. 1, but showing a first modification of the color display panel of Fig. 1;
Fig. 6 is a similar view to Fig. 1, but showing a second modification of the color display panel of Fig. 1;
Fig. 7 is a similar view to Fig. 1, but showing a third modification of the color display panel of Fig. 1; and
Figs. 8 and 9 are respectively schematic views showing arrangements of picture element units of conventional display panels.

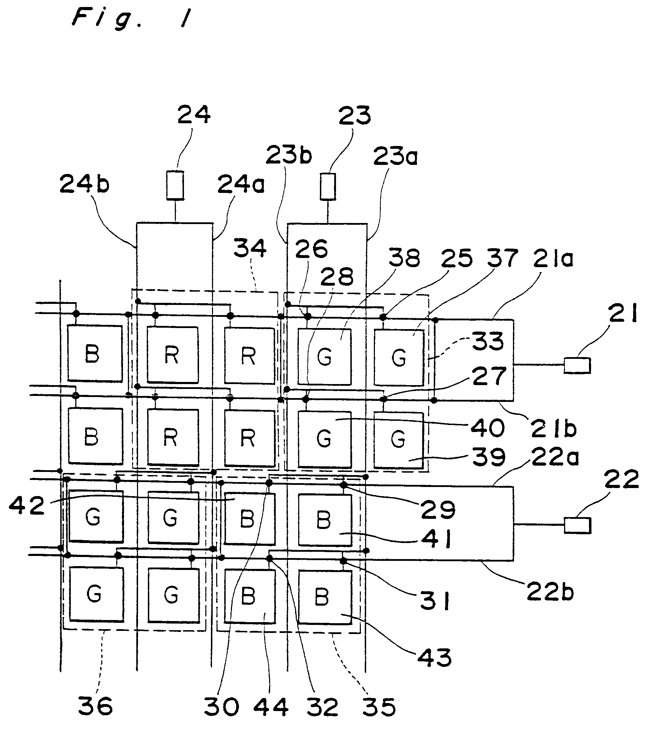

Referring now to the drawings, Fig. 1 shows an arrangement of the respective picture elements of the color display panel in accordance with a first preferred embodiment of the present invention. The color display panel has the respective picture element units 34, 33, 35, ... R (red), G (green), B (blue) each having the configuration of square in the substantial same dimensions and disposed in a delta arrangement, with the plane surface being filled with the R, G, B picture element units 34, 33, 35, ... disposed in the delta arrangement, each of the picture element units being respectively composed of four small picture elements 37, 38, 39, 40; 41, 42, 43, 44, ... each having the configuration of square in the substantial same dimension, the small picture elements 37, 38, 39, 40; 41, 42, 43, 44, ... being arranged in the checkerboard squares. Accordingly, all of the small picture elements having the configuration of squares are arranged in the checkerboard squares, while all of the picture element units each including the four small picture elements formed in the configuration of a square are arranged in the delta arrangement.

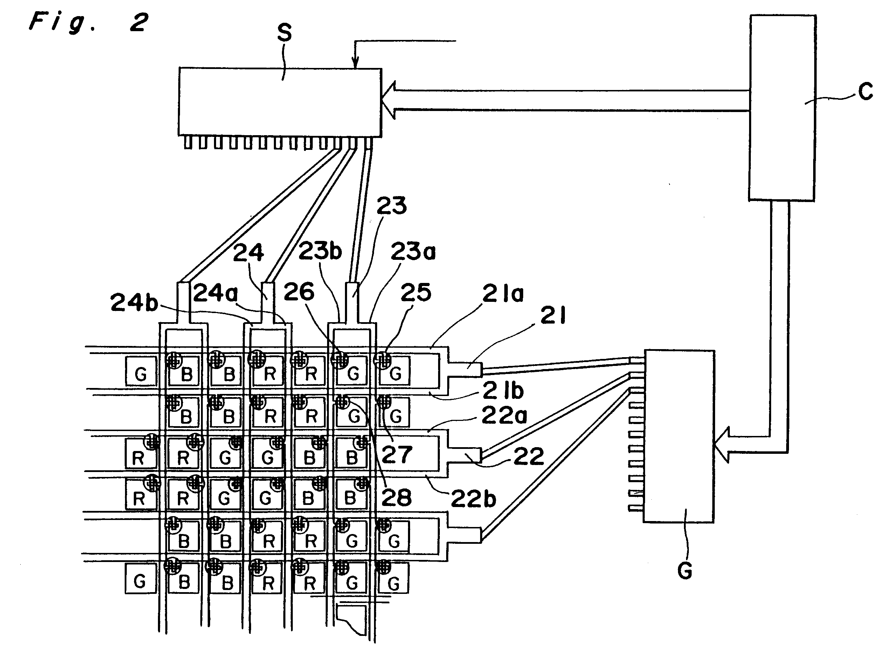

Two adjacent side scanning signal lines (for example, side scanning signal lines 21a, 21b, or side scanning signal lines 22a, 22b and the like) from among a plurality of side scanning signal lines 21a, 21b, 22a, 22b, ... are connected with each other so as to constitute scanning signal lines 21, 22, ... connected to a gate driver G to which gate signals are inputted from a controller C, as shown in Fig. 2. Also, two adjacent side data signal lines (for example, side data signal lines 23a, 23b, or side data signal lines 24a, 24b, and the like) from among a plurality of side data signal lines 23a, 23b, 24a, 24b, ... are connected with each other so as to constitute data signal lines 23, 24, ... connected to a source driver to which source signals are inputted from the controller C, as shown in Fig. 2. Also, the connections of the adjacent side scanning signal lines and the side data signal lines are effected at a plurality of locations not only beyond the display portion, but also among the small picture elements 37, ... .

The o marks 25, 26, 27, 28, ... in the drawings show active elements for controlling the "on/off" of the small picture elements 37, 38, 39, 40, ... composed of liquid crystals L. The active elements 25, ..., each corresponding to one picture element, are composed of thin film transistors (TFT), etc., as shown in Fig. 3, wherein a TFT is provided among the scanning signal line, the data signal line and the liquid crystal L associated with a holding capacity H. Namely, when the active elements 25, ... are composed of thin film transistors, the side scanning signal line is connected with the gate of the thin film transistor, the side data signal line is connected with the source or the drain, and the transparent electrode of the liquid crystal constituting the small picture element is connected with the drain or the source so as to form the thin film transistor integrally on the basic plate of the liquid crystal. Also, for example, through the operation of the active element 25 by the signals of the side scanning signal line 21a and the side data signal line 23b, the electric potential of the transparent element of the liquid crystal is controlled to change the direction of the liquid crystal for controlling the passing of the light in the small picture element 37.

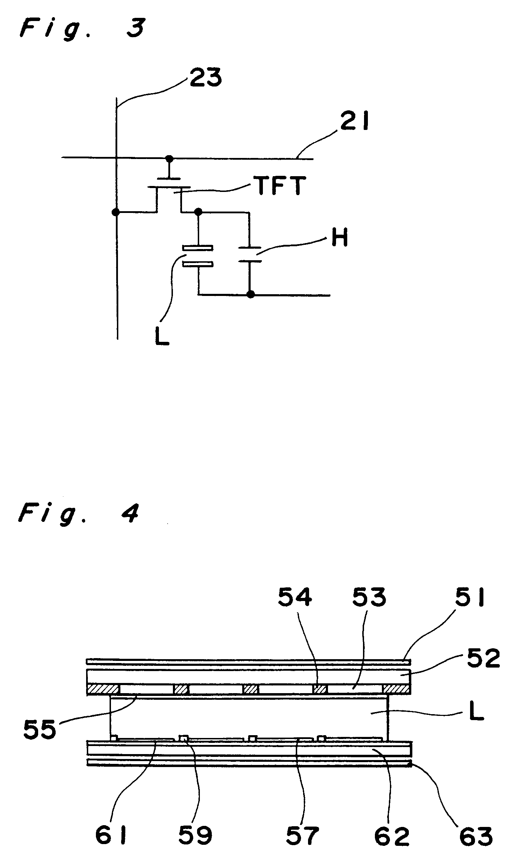

Besides, in order to represent a color by the above-described color display panel, the color filters of red, green and blue are formed on the surfaces of the small picture elements 37, ... . The R, G and B in the drawing show the colors of the color filters. In this case, the same G color filter is formed on the surfaces of four small picture elements 37, 38, 39, 40 which constitute the picture element unit 33 of the G. As shown in Fig. 4, a color display device is constructed with a unit of integrated layers consisting of an upper deflection plate 51, an upper glass plate 52, a color filter 53 with a black matrix 54, a common electrode 55, a liquid crystal L, a color display panel 57 including picture element units, TFTs 59, and column electrodes 60, row electrodes 61, a lower glass plate 62, and a lower deflection plate 63. The picture element units are formed on the lower plate to be faced with the upper glass base plate with a liquid crystal of twisted nematic field effect type being provided between the glass plates.

The color filter is formed either on one of the glass plates forming each of the picture element units or on the other glass plate facing to the one glass plate forming each of the picture element units, with providing black stripes for flare stop in gaps to be disposed between the color filters.

Then, the method of connecting the small picture elements 37, ... with the scanning signal lines 21, ... and the data signal lines 23, ... will be described in detail.

The two small picture elements 37, 38 from among four small picture elements 37, 38, 39 and 40 belonging to the picture element unit 33 are connected, as described hereinabove, with the side scanning signal line 21a and the side data signal line 23b through the active elements 25, 26. On the other hand, the other two small picture elements 39, 40 are connected with the side scanning signal line 21b and the side data signal line 23b through the active elements 27, 28. In this case, the small picture elements 37, 38 are disposed on the lower side, as shown in Fig. 1, of the side scanning signal line 21a, the small picture elements 39, 40 are disposed on the lower side, as shown in Fig. 1, of the side scanning signal line 21b. Also, the small picture elements 37, 39 are disposed on the right side, as shown in Fig. 1, of the side data signal line 23a, the small picture elements 38, 40 are disposed on the right side, as shown in Fig. 1, of the side data signal line 23b. Namely, when a selection signal is inputted into the scanning signal line 21 and the data signal line 23, the active elements 25, 26, 27 and 28 are operated, so that the small picture elements 37, 38, 39 and 40 allow the light to transmit through them, and the picture element unit 33 displays a green color.

Then, four small picture elements belonging to a picture element unit 34 are also connected with the scanning signal line 21 and the data signal line 24 in the same way as described hereinabove. Accordingly, when a selection signal is inputted into the scanning signal line 21 and the data signal line 24, four small picture elements belonging to the picture element unit 34 allow the light to transmit through them, so that the picture element unit 34 displays a red color.

Then, two small picture elements 41, 42, from among four small picture elements 41, 42, 43 and 44 belonging to the picture element unit 35 are connected with the side scanning signal line 22a and the side data signal line 23a. On the other hand, the other two small picture elements 43, 44 are connected with the side scanning signal line 22b and the side data signal line 23a through the active elements 31, 32. In this case, the small picture elements 41, 42 are disposed on the lower side, as shown in Fig. 1, of the side scanning signal line 22a, the small picture elements 43, 44 are disposed on the lower side, as shown in Fig. 1, of the side scanning signal line 22b. Also, the small picture elements 41, 43 are disposed on the left side of the side data signal line 23a, the small picture elements 42, 44 are disposed on the left side, as shown in Fig. 1, of the side data signal line 23b. Namely, when a selection signal is inputted into a scanning signal line 22 and a data signal line 23, the active elements 29, 30, 31, and 32 are operated, so that the small picture elements 41, 42, 43 and 44 allow the light to transmit through them, the picture element 35 displays a blue color.

Then, four small picture elements belonging to the picture element unit 36 are connected with the scanning signal line 22 and the data signal line 24 in the same way as described hereinabove. Accordingly, when a selection signal is inputted into the scanning signal line 22 and the data signal line 24, four small picture elements belonging to the picture element unit 36 allow the light to be transmitted therethrough, so that the picture element 36 displays a green color.

The other small picture element is, also, connected with the scanning signal line and the data signal line, likewise, with the picture element unit as a group.

Here, as described hereinabove, the small picture elements 37, 38, 39 and 40 belonging to a picture element unit 33 to be selected by the data signal line 23 are disposed on the right side, as shown in Fig. 1, of the side data signal line 23a or the side data signal line 23b. Also, small picture elements 41, 42, 43 and 44 belonging to the picture element unit 35 selected by the same data signal line 23 are disposed on the left side, as shown in Fig. 1, of the side data signal line 23a or the side data signal line 23b. Namely, the picture element unit connected with the same data signal line has the small picture elements belonging to the picture element disposed in a zigzag way with respect to the side data signal line alternately with the picture element unit as a group, and the side data signal line is connected with the small picture elements in a zigzag way with the picture element unit as a group. Accordingly, although the arrangement pattern of the respective small picture elements 37, 38, 39, 40, ... is arranged in the checkerboard squares, the respective picture elements 33, 34, 35, 36, ... are arranged out of phase by the half of the picture element unit in the horizontal direction to be connected with the picture elements of the delta arrangement.

As described hereinabove, the color display panel of the present invention has the arrangement pattern of the respective small picture elements 37, ... arranged in the checkerboard squares. Accordingly, the wiring, etc. may be made simpler and the defect ratio may be lower, with the lower price being provided. On the contrary, the respective picture element units 33, ... may be arranged in delta. Accordingly, the arrangement pattern of the respective picture element units 33, ... is directionless, with the display quality being superior.

Also, the color display panel of the invention has one picture element unit 33, ... composed of four small picture elements 37, 38, 39, 40, ... , with one active element 25, ... being provided corresponding to the respective small picture elements 37, ... . Accordingly, even if, for example, one active element 25 cannot function, the small picture elements 38, 39 and 40 are displayed into G by the three remaining active elements 26, 27 and 28, so that the display does not become defective as the picture element unit 33.

By the above-described effect, it is possible to manufacture a large-sized color liquid crystal display element if the color display panel of the present invention is used.

In the present embodiment, one picture element unit is composed of four small picture elements, with the present invention being not restricted to it.

In the present embodiment, the phase of each picture element is out of position in the horizontal direction, with the present invention being not restricted to it. Namely, small picture elements belonging to the picture element unit to be connected with the same scanning signal line are disposed in a zigzag way with respect to the side scanning signal line alternately with the picture element unit as a group, and the side scanning signal line may be connected with the small picture elements in a zigzag way with the picture element unit as a group. In this case, the phase of each picture element is disposed by the half of the picture element unit in the vertical direction, with the arrangement pattern of each picture element unit being provided in the delta arrangement.

As described hereinabove, the color display panel of the present invention has a picture element unit, composed of a plurality of small picture elements, arranged in delta shape, with all the small picture elements included in a plurality of picture element units being disposed in the checkerboard squares, so that superior display quality may be provided, thus resulting in easier wiring and higher reliability.

Also, as each of picture element units is composed of a plurality of small picture elements, the picture element units may effect the display by the other small picture elements even if one small picture element constituting the picture element unit cannot effect the display, with a result that the display does not become defective.

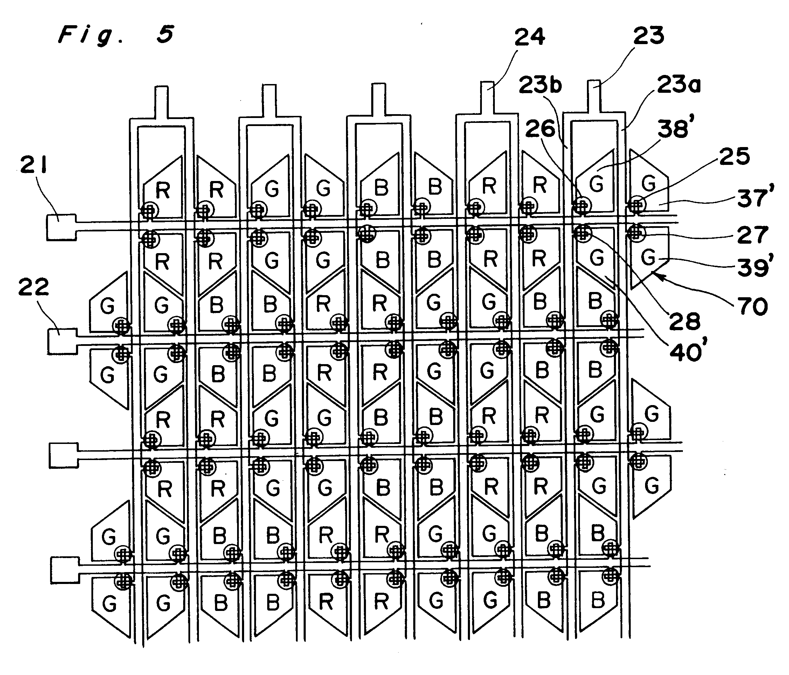

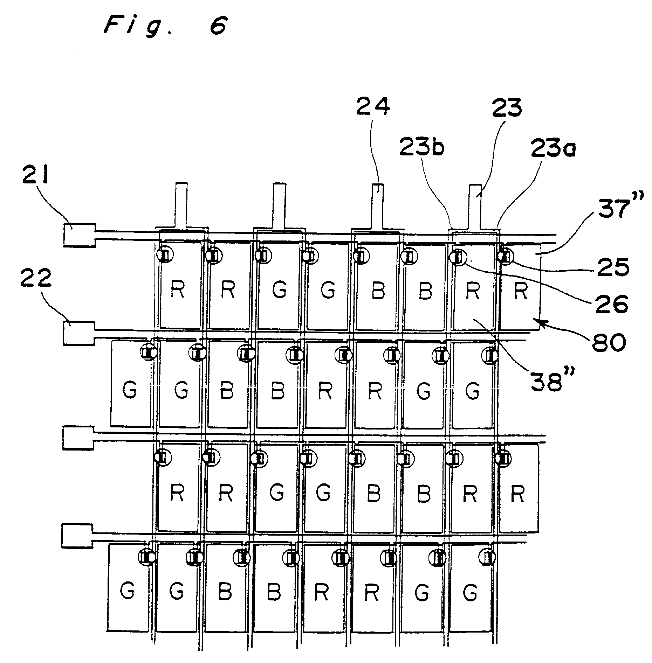

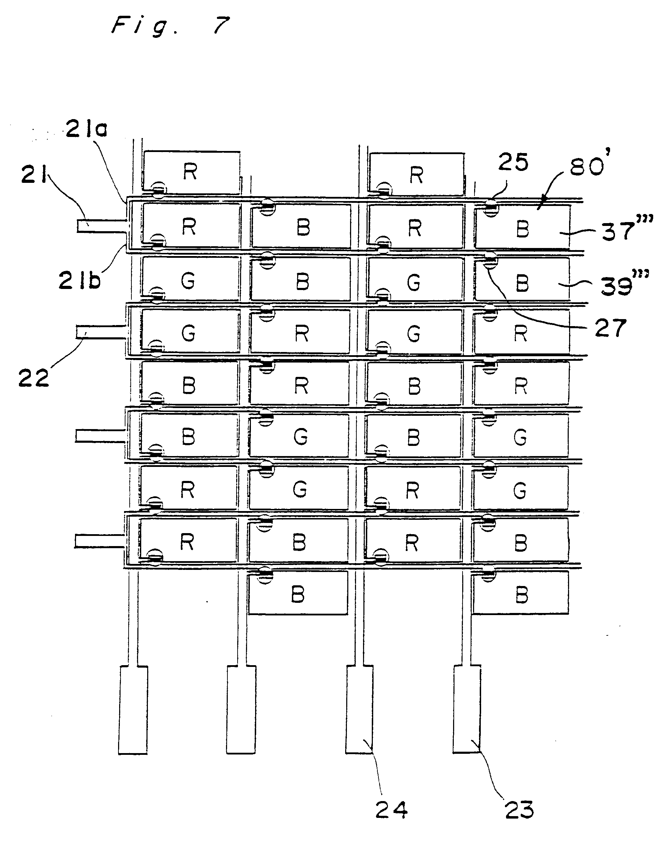

Although the present invention has been fully described in connection with the preferred embodiments thereof with reference to the accompanying drawings, it is to be noted that various changes and modifications are apparent to those skilled in the art. For instance, in a first modification of Fig. 5, there is provided a color display panel consisting of a plurality of picture element units R, G, B having the configuration of hexagons 70 which are disposed on a plan of a delta arrangement of R, G, B to form a hexagonal pattern, the picture element units being respectively divided into four small color elements 37', 38', 39', 40' having the configuration of irregular rectangles which are arranged in checkerboard squares to form a matrix pattern with providing a single side scanning signal line and double side data signal lines for each of the small color elements. Namely, the small picture elements are provided by dividing the hexagonal electrode of the picture element unit into more than two pieces. Also, in a second modification of Fig. 6, there is provided a color display panel consisting of a plurality of picture element units R, G, B having a configuration of squares 80 disposed on a plan of the delta arrangement, the picture element units being respectively divided into two small color elements 37'', 38'' having the configuration of rectangles which are vertically arranged in checkerboard squares to form a matrix pattern, with providing a single side scanning signal line and double side data signal lines for each of the small color elements. Namely, the small picture elements are provided by dividing the about square electrode of the picture element unit into two pieces of equal dimensions. In addition, in a third modification of Fig. 7, there is provided a color display panel consisting of a plurality of picture element units R, G, B having the configuration of squares 80' disposed on a plan of a delta arrangement, the picture element units being respectively divided into two small color elements 37''', 39''' having the configuration of rectangulars which are horizontally arranged in checkerboard squares to form a matrix pattern, with providing double side scanning signal line and a single data signal line for each of the small color elements. Also, the small picture elements may be provided by dividing the rectangular electrode of the picture element unit into more than two pieces in the color display panel. Such changes and modifications are to be understood as included within the scope of the present invention as defined by the appended claims unless they depart therefrom.

## Claims

1. A colour display panel comprising:
a plurality of picture element units (33-36;70; 80;80') of R, G, B all disposed in a delta arrangement on a plane, each of the elements being composed of a plurality of picture sub-elements (37-40,41-44;37'-40';37'',38''; 37''',39''') each separated from the other, all of the picture sub-elements being arranged in an array forming an overall regular pattern of orthogonal rows and columns on the plane;
a plurality of switching means (25-28;25-28;25, 26;25,27) each arranged for actuating a respective picture sub-element; and
two sets of mutually orthogonal circuit lines (21,22;23,24) arranged for driving said plurality of switching means, the circuit lines of at least one of the sets each being divided into two branches (21a/21b,22a/22b;23a/23b,24a/24b) which extend parallel to each other and carry the same signal, each picture element unit (e.g. 33;70;80;80') being connected to a respective pair of circuit lines (21,23), comprising one circuit line from each set, by picture sub-elements of the unit being connected, via respective said switching means, to different branches (21a,21b;23a,23b;23a,23b;21a,21b) of one circuit line of said pair of circuit lines and to the other circuit line (23;21;21;23) of said pair of circuit lines.

2. A colour display panel according to claim 1, wherein each picture element unit (33-36) has the configuration of a square divided into four said picture sub-elements (e.g. 37-40,41-44), and the circuit lines (21-24) of both said sets are branched into two said branches respectively.

3. A colour display panel according to claim 2, wherein the four picture sub-elements of each unit are of square shape and of equal size.

4. A colour display panel according to claim 2 or claim 3, wherein all the picture sub-elements (e.g. 37,38;39,40;41,42;43,44) in each said row are connected to the same branch (21a;21b;22a;22b) of a circuit line (21;22) extending in the row direction, and the picture sub-elements (e.g. 38,40;41,43) in each said column are respectively connected to one of two different branches (23b;23a) of a circuit line (23) extending in the column direction, or to one of two different branches of two adjacent circuit lines (23,24) extending in the column direction, the branch to which connection of the sub-elements is made alternating along the side of the column at each picture element unit (33;35).

5. A colour display panel according to claim 1, wherein each picture element unit (80) has the configuration of a square divided into two said picture sub-elements of rectangular shape (37'',38''), the longer dimension of the rectangle extending in the column direction, the circuit lines (23,24) of the set which applies data signals to the columns of picture sub-elements being branched as aforesaid whereby the two picture sub-elements (37'',38'') of each unit (80) are connected to different branches (23a,23b) of a circuit line (23), and the circuit lines (21,22) of the set which applies scan signals to the rows of picture sub-elements not being branched as aforesaid.

6. A colour display panel according to claim 1, wherein each picture element unit (80') has the configuration of a square divided into two said picture sub-elements of rectangular shape (37''', 39'''), the longer dimension of the rectangle extending in the row direction, the circuit lines (21,22) of the set which applies scan signals to the rows of picture sub-elements being branched as aforesaid whereby the two picture sub-elements (37''',39''') of each unit (80') are connected to different branches (21a,21b) of a circuit line (21), and the circuit lines (23,24) of the set which applies data signals to the columns of picture sub-elements not being branched as aforesaid.

7. A colour display panel according to claim 1, wherein each picture element unit (70) has the configuration of a hexagon divided into more than two said picture sub-elements (37'-40'), the circuit lines (23,24) of the set which applies data signals to the columns of picture sub-elements being branched as aforesaid whereby picture sub-elements (e.g. 37',38') of each unit (70) are connected to different branches (23a,23b) of a circuit line (23), and the circuit lines (21,22) of the set which applies scan signals to the rows of picture sub-elements not being branched as aforesaid.

8. A colour display panel according to claim 7, wherein each picture element unit (70) comprises four said picture sub-elements (37'-40') of irregular rectangle shape.

9. A colour display panel according to claim 8, wherein the picture sub-elements in each said column are connected to one of the two branches (e.g. 23a, 23b) of a circuit line (23), the branch to which connection is made alternating along the circuit line at each picture element unit (70).

10. A colour display panel according to any one of the preceding claims, wherein the circuit lines (21-24) are arranged in approximately straight lines within the display picture plane.

11. A colour display panel according to claim 10, wherein the picture sub-elements are arranged within areas defined by the circuit lines.

12. A colour display panel according to any one of the preceding claims, comprising two plates (52,62) which sandwich a twisted-nematic field-effect type liquid crystal material (L), the picture element units (57) being formed on one (62) of the plates.

13. A colour display panel according to any one of the preceding claims, wherein a display colour of each picture element unit (57) is provided by a colour filter (53).

14. A colour display panel according to claim 13, as appendant to claim 12, wherein the colour filter (53) is formed on either the same plate as the picture element units (57) or the plate facing the picture element units.

15. A colour display panel according to claim 13, wherein black stripes (54) for flare stop are provided within the gaps between adjacent colour filters (53).

16. A colour display panel according to any one of the preceding claims, wherein each switching means (25-28) comprises a thin film transistor having a gate connected to a circuit line (21) of the set which applies scan signals to the picture element units, a source or drain connected to a circuit line (23) of the set which applies data signals to the picture element units, and a drain or source connected to the associated picture sub-element (37-40).

## Patentansprüche

1. Farbanzeigetafel mit:
- mehreren Bildelementeinheiten (33-36; 70; 80; 80') für R, G, B, die alle in einer Ebene mit Dreiecksanordnung angeordnet sind, wobei jedes der Elemente aus mehreren Bildunterelementen (37-40, 41-44; 37'-40'; 37'', 38''; 37''', 39''') besteht, die voneinander getrennt sind, wobei alle Bildunterelemente in einem Array angeordnet sind, das ein insgesamt regelmäßiges Muster mit zueinander rechtwinkligen Zeilen und Spalten in der Ebene bildet;
- mehreren Schaltelementen (25-28; 25-28; 25, 26; 25, 27), die jeweils so angeordnet sind, daß sie ein jeweiliges Bildunterelement betätigen; und
- zwei Sätzen zueinander rechtwinkliger Schaltkreisleitungen (21, 22; 23, 24), die so angeordnet sind, daß sie die mehreren Schalteinrichtungen ansteuern, wobei die Schaltkreisleitungen mindestens eines der Sätze jeweils in zwei Zweige (21a/21b, 22a/22b; 23a/23b, 24a/24b) unterteilt sind, die sich parallel zueinander erstrecken und dasselbe Signal führen, wobei jede Bildelementeinheit (z.B. 33; 70; 80; 80') mit einem jeweiligen Paar Schaltkreisleitungen (21, 23) verbunden ist, mit einer Schaltkreisleitung von jedem Satz, wobei Bildunterelemente der Einheit über die jeweilige Schalteinrichtung mit verschiedenen Zweigen (21a, 21b; 23a, 23b; 23a, 23b; 21a, 21b) der einen Schaltkreisleitung des Paars Schaltkreisleitungen sowie mit der anderen Schaltkreisleitung (23; 21; 21; 23) des Paars Schaltkreisleitungen verbunden sind.

2. Farbanzeigetafel nach Anspruch 1, bei der jede Bildelementeinheit (33-36) die Form eines Quadrates aufweist, das in die vier Bildunterelemente (z.B. 37-40, 41-44) unterteilt ist, und die Schaltkreisleitungen (21-24) der beiden Sätze jeweils in die zwei Zweige verzweigt sind.

3. Farbanzeigetafel nach Anspruch 2, bei der die vier Bildunterelemente jeder Einheit quadratisch und von derselben Größe sind.

4. Farbanzeigetafel nach Anspruch 2 oder Anspruch 3, bei der alle Bildunterelemente (z.B. 37, 38; 39, 40; 41, 42; 43, 44) in jeder Zeile mit demselben Zweig (21a; 21b; 22a; 22b) einer Schaltkreisleitung (21; 22) verbunden sind, die sich in Zeilenrichtung erstreckt, und die Bildunterelemente (z.B. 38, 40; 41, 43) in jeder Spalte jeweils mit einem der zwei verschiedenen Zweige (23b; 23a) der Schaltkreisleitung (23), die sich in Spaltenrichtung erstreckt, oder mit einem der zwei verschiedenen Zweige zweier benachbarter Schaltkreisleitungen (23, 24), die sich in Spaltenrichtung erstrecken, verbunden sind, wobei der Zweig, zu dem der Anschluß der Unterelemente erfolgt, entlang der Spalte bei jeder Bildelementeinheit (33; 35) die Seite wechselt.

5. Farbanzeigetafel nach Anspruch 1, bei der jede Bildelementeinheit (80) die Form eines Quadrates aufweist, das in zwei rechteckige Bildunterelemente (37'', 38'') unterteilt ist, mit der längeren Abmessung des Rechtecks in Spaltenrichtung, wobei die Schaltkreisleitungen (23, 24) des Satzes, der die Datensignale an die Spalten der Bildunterelemente anlegt, wie vorstehend genannt aufgezweigt sind, wobei die zwei Bildunterelemente (37'', 38'') jeder Einheit (80) mit verschiedenen Zweigen (23a, 23b) einer Schaltkreisleitung (23) verbunden sind und die Schaltkreisleitungen (21, 22) des Satzes, der die Abrastersignale an die Zeilen der Bildunterelemente legt, nicht aufgezweigt sind, wie vorstehend genannt.

6. Farbanzeigetafel nach Anspruch 1, bei der jede Bildelementeinheit (80') die Form eines Quadrates aufweist, das in zwei rechteckige Bildunterelemente (37''', 39''') unterteilt ist, mit der längeren Abmessung des Rechtecks in Zeilenrichtung, wobei die Schaltkreisleitungen (21, 22) des Satzes, der Abrastersignale an die Zeilen von Bildunterelementen anlegt, wie vorstehend genannt aufgezweigt sind, wobei die zwei Bildunterelemente (37''', 39''') jeder Einheit (80') mit verschiedenen Zweigen (21a, 21b) einer Schaltkreisleitung (21) verbunden sind, und die Schaltkreisleitungen (23, 24) des Satzes, der Datensignale an die Spalten der Bildunterelemente legt, nicht aufgezweigt sind, wie vorstehend genannt.

7. Farbanzeigetafel nach Anspruch 1, bei der jede Bildelementeinheit (70) die Form eines Rechtecks aufweist, das in mehr als zwei Bildunterelemente (37'-40') unterteilt ist, wobei die Schaltkreisleitungen (23, 24) des Satzes, der Datensignale an die Spalten von Bildelementen anlegt, wie vorstehend genannt aufgezweigt sind, wobei Bildunterelemente (z.B. 37', 38') jeder Einheit (70) mit verschiedenen Zweigen (23a, 23b) einer Schaltkreisleitung (23) verbunden sind, und die Schaltkreisleitungen (21, 22) jedes Satzes, der Abrastersignale an die Zeilen von Bildunterelementen anlegt, nicht aufgezweigt sind, wie vorstehend genannt.

8. Farbanzeigetafel nach Anspruch 7, bei der jede Bildelementeinheit (70) vier Bildunterelemente (37'-40') unregelmäßiger Rechteckform aufweist.

9. Farbanzeigetafel nach Anspruch 8, bei der die Bildunterelemente in jeder Spalte mit einem der zwei Zweige (z.B. 23a, 23b) einer Schaltkreisleitung (23) verbunden sind, wobei der Zweig, zu dem die Verbindung erfolgt, entlang der Schaltkreisleitung bei jeder Bildelementeinheit (70) wechselt.

10. Farbanzeigetafel nach einem der vorstehenden Ansprüche, bei der die Schaltkreisleitungen (21-24) in ungefähr geraden Linien innerhalb der Bildanzeigeebene angeordnet sind.

11. Farbanzeigetafel nach Anspruch 10, bei der die Bildunterelemente innerhalb von Bereichen angeordnet sind, die durch die Schaltkreisleitungen festgelegt sind.

12. Farbanzeigetafel nach einem der vorstehenden Ansprüche, mit zwei Platten (52, 62), die ein verdrillt nematisches Flüssigkristallmaterial (L) vom Feldeffekttyp einbetten, wobei die Bildelementeinheiten (57) auf einer (62) der Platten ausgebildet sind.

13. Farbanzeigetafel nach einem der vorstehenden Ansprüche, bei der die Anzeigefarbe jeder Bildelementeinheit (57) durch ein Farbfilter (53) erzeugt wird.

14. Farbanzeigetafel nach Anspruch 13 in Abhängigkeit von Anspruch 12, bei der das Farbfilter (53) entweder auf derselben Platte wie die Bildelementeinheiten (57) oder auf der den Bildelementeinheiten zugewandten Platte ausgebildet ist.

15. Farbanzeigetafel nach Anspruch 13, bei der schwarze Streifen (54) zum Ausblenden von Streulicht innerhalb der Lücken zwischen benachbarten Farbfiltern (53) vorhanden sind.

16. Farbanzeigetafel nach einem der vorstehenden Ansprüche, bei der jede Schalteinrichtung (25-28) einen Dünnfilmtransistor aufweist, mit einem Gate, das mit einer Schaltkreisleitung (21) des Satzes verbunden ist, der Abrastersignale an die Bildelemente anlegt, mit einer Source oder einem Drain, die bzw. der mit einer Schaltkreisleitung (23) des Satzes verbunden ist, der Datensignale an die Bildelemente anlegt, und mit einem Drain oder einer Source, die mit dem zugehörigen Bildunterelement (37-40 verbunden ist.

## Revendications

1. Panneau d'affichage en couleurs comprenant :
plusieurs unités d'élément d'image (33 à 36 ; 70; 80 ; 80') de R (rouge), G (vert), B (bleu) entièrement disposées dans une disposition en delta sur un plan, chacun des éléments étant composé de plusieurs sous-éléments d'image (37 à 40, 41 à 44 ; 37' à 40' ; 37'', 38'' ; 37''', 39''') séparés les uns des autres, l'ensemble des sous-éléments d'image étant disposé dans une matrice formant une trame globalement régulière de rangées et de colonnes orthogonales sur le plan;
plusieurs moyens de commutation (25 à 28 ; 25 à 28; 25, 26 ; 25, 27) chacun étant disposé de façon à activer un sous-élément d'image respectif ; et
deux jeux de lignes de circuit orthogonales l'une par rapport à l'autre (21, 22 ; 23, 24) disposées de façon à commander lesdits plusieurs moyens de commutation, les lignes de circuit d'au moins l'un des jeux étant divisées en deux branches (21a/21b, 22a/22b; 23a/23b, 24a/24b) qui s'étendent parallèlement l'une à l'autre et reçoivent le même signal, chaque unité d'élément d'image (c'est-à-dire 33 ; 70 ; 80 ; 80') étant reliée à une paire de lignes de circuit respective (21, 23), comprenant une ligne de circuit de chaque jeu, par sous-élément d'image de l'unité reliée, à travers ledit moyen de commutation respectif, aux différentes branches (21a, 21b ; 23a, 23b ; 23a, 23b ; 21a, 21b) d'une ligne de circuit de ladite paire de lignes de circuit et à l'autre ligne de circuit (23 ; 21 ; 21 ; 23) de ladite paire de lignes de circuit.

2. Panneau d'affichage en couleurs selon la revendication 1, dans lequel chaque unité d'élément d'image (33 à 36) présente la configuration d'un carré divisé en quatre desdits sous-éléments d'image (c'est-à-dire 37 à 40, 41 à 44), et les lignes de circuit (21 à 24) desdits deux jeux sont respectivement divisées en deux desdites branches.

3. Panneau d'affichage en couleurs selon la revendication 2, dans lequel les quatre sous-éléments d'image de chaque unité sont de forme carrée et de taille identique.

4. Panneau d'affichage en couleurs selon la revendication 2 ou la revendication 3, dans lequel l'ensemble des sous-éléments d'image (c'est-à-dire 37, 38; 39, 40 ; 41, 42 ; 43, 44) dans chacune desdites rangées est relié à la même branche (21a ; 21b ; 22a; 22b) d'une ligne de circuit (21 ; 22) s'étendant dans le sens de la rangée, et les sous-éléments d'image (c'est-à-dire 38, 40 ; 41, 43) dans chacune desdites colonnes sont reliés respectivement à l'une des deux différentes branches (23b ; 23a) d'une ligne de circuit (23) s'étendant dans le sens de la colonne, ou à l'une des deux différentes branches de deux lignes de circuit adjacentes (23, 24) s'étendant dans le sens de la colonne, la branche avec laquelle la liaison des sous-éléments est faite alternant le long du côté de la colonne sur chaque unité d'élément d'image (33 ; 35).

5. Panneau d'affichage en couleurs selon la revendication 1, dans lequel chaque unité d'élément d'image (80) présente la configuration d'un carré divisé en deux desdits sous-éléments d'image de forme rectangulaire (37'', 38''), la dimension la plus longue du rectangle s'étendant dans le sens de la colonne, les lignes de circuit (23, 24) du jeu qui délivrent les signaux de données aux colonnes des sous-éléments d'image étant divisées comme mentionné précédemment, ce par quoi les deux sous-éléments d'image (37'', 38'') de chaque unité (80) sont reliés aux différentes branches (23a, 23b) d'une ligne de circuit (23), et les lignes de circuit (21, 22) du jeu qui délivrent des signaux de balayage aux rangées des sous-éléments d'image n'étant pas divisées comme précédemment.

6. Panneau d'affichage en couleurs selon la revendication 1, dans lequel chaque unité d'élément d'image (80') présente la configuration d'un carré divisé en deux desdits sous-éléments d'image de forme rectangulaire (37''', 39'''), la dimension la plus longue du rectangle s'étendant dans le sens de la rangée, les lignes de circuit (21, 22) du jeu qui délivrent des signaux de balayage sur les rangées des sous-éléments d'image étant divisées comme précédemment, ce par quoi les deux sous-éléments d'image (37''', 39''') de chaque unité (80') sont reliés aux différentes branches (21a, 21b) de la ligne de circuit (21), et les lignes de circuit (23, 24) du jeu qui délivrent des signaux de données aux colonnes des sous-éléments d'image n'étant pas divisées comme précédemment.

7. Panneau d'affichage en couleurs selon la revendication 1, dans lequel chaque unité d'élément d'image (70) présente la configuration d'un hexagone divisé en plus de deux desdits sous-éléments d'image (37' à 40'), les lignes de circuit (23, 24) du jeu qui délivrent des signaux de données aux colonnes des sous-éléments d'image étant divisées comme précédemment, ce par quoi les sous-éléments d'image (c'est-à-dire 37', 38') de chaque unité (70) sont reliés aux différentes branches (23a, 23b) de la ligne de circuit (23), et les lignes de circuit (21, 22) du jeu qui délivrent des signaux de balayage aux rangées des sous-éléments d'image n'étant pas divisées comme précédemment.

8. Panneau d'affichage en couleurs selon la revendication 7, dans lequel chaque unité d'élément d'image (70) comprend quatre desdits sous-éléments d'image (37' à 40') de forme rectangulaire irrégulière.

9. Panneau d'affichage en couleurs selon la revendication 8, dans lequel les sous-éléments d'image de chacune desdites colonnes sont reliés à l'une des deux branches (c'est-à-dire 23a, 23b) d'une ligne de circuit (23), la branche avec laquelle la liaison est faite alternant le long de la ligne de circuit à chaque unité d'élément d'image (70).

10. Panneau d'affichage en couleurs selon l'une quelconque des revendications précédentes, dans lequel les lignes de circuit (21 à 24) sont disposées approximativement en lignes droites à l'intérieur du plan d'affichage d'image.

11. Panneau d'affichage en couleurs selon la revendication 10, dans lequel les sous-éléments d'image sont disposés à l'intérieur de zones définies par les lignes de circuit.

12. Panneau d'affichage en couleurs selon l'une quelconque des revendications précédentes, comprenant deux plaques (52, 62) intercalant un matériau en cristal liquide du type à effet de champ nématique torsadé (L), les unités d'élément d'image (57) étant formées sur l'une des plaques (62).

13. Panneau d'affichage en couleurs selon l'une quelconque des revendications précédentes, dans lequel une couleur d'affichage de chaque unité d'élément d'image (57) est produite par un filtre de couleur (53).

14. Panneau d'affichage en couleurs selon la revendication 13, lorsqu'elle est dépendante de la revendication 12, dans lequel le filtre de couleur (53) est formé soit sur la même plaque que les unités d'élément d'image (57), soit sur la plaque faisant face aux unités d'élément d'image.

15. Panneau d'affichage en couleurs selon la revendication 13, dans lequel des bandes noires (54) destinées à faire masque anti-reflets sont prévues à l'intérieur des intervalles entre les filtres de couleur adjacents (53).

16. Panneau d'affichage en couleurs selon l'une quelconque des revendications précédentes, dans lequel chaque moyen de commutation (25 à 28) comprend un transistor à film mince pourvu d'une porte reliée à une ligne de circuit (21) du jeu qui délivre les signaux de balayage aux unités d'élément d'image, une source ou un drain relié à une ligne de circuit (23) du jeu qui délivre les signaux de données aux unités d'élément d'image, et un drain ou une source relié aux sous-éléments d'image associés (37 à 40).
